# EUROPÄISCHE PATENTSCHRIFT

(11) **EP 0 866 186 B1**
(45) Veröffentlichungstag und Bekanntmachung des Hinweises auf die Patenterteilung: **02.05.2003**
(21) Anmeldenummer: 98104582.6
(22) Anmeldetag: 13.03.1998
(51) Int. Cl.: E04B 1/26, F16B 12/22

(54) **Verbindungsvorrichtung und Verwendung der Verbindungsvorrichtung**
Connector device and use thereof
Dispositif d'assemblage et son utilisation

(30) Priorität: 21.03.1997 CH 68997
(43) Veröffentlichungstag der Anmeldung: 23.09.1998
(73) Patentinhaber: Furrer, Bruno Alfons, 6078 Lungern (CH)
(72) Erfinder: Furrer, Bruno Alfons, 6078 Lungern (CH)
(74) Vertreter: Heusch, Christian

(56) Entgegenhaltungen:
- BE-A- 450 662
- DE-U- 8 708 112
- FR-A- 801 820
- FR-A- 1 283 917
- FR-A- 1 349 422
- FR-A- 2 258 775
- GB-A- 275 107
- GB-A- 588 905
- GB-A- 1 248 905
- US-A- 4 881 844

## Beschreibung

Die Erfindung betrifft eine Verbindungsvorrichtung, d.h. eine Verbindungsanordnung, nach dem Oberbegriff des Patentanspruchs **1** und eine Verwendung dieser Verbindungsanordnung nach dem Oberbegriff des Patentanspruchs **6.**

Verbindungsanordnungen dieser Art sind zur Verbindung von zwei Bauteilen bestimmt, die aus gleichen oder verschiedenen Werkstoffen, insbesondere aus Holz, Metall, Backstein oder Beton bestehen. Häufig ist mindestens einer der Bauteile balken- stützen- bzw. trägerartig, wobei die Querschnittsfläche die Anschlussfläche bildet, an welcher die Verbindungsanordnung angeordnet wird. Die Anschlussfläche des zweite Bauteils kann ebenfalls eine Querschnittsfläche eines Trägers sein, sie kann aber auch durch einen geeigneten Bereich einer grösseren Aussenfläche des Bauteils gebildet werden.

Solche Verbindungsanordnungen umfassen eine erste und eine zweite Verbindungsplatte. Im montierten Zustand ist jede der Verbindungsplatten mit ihrer Hinterfläche an der Anschlussfläche des jeweils zugehörigen Bauteils befestigt. Die erste der Verbindungsplatten weist mehrere Vorsprünge und die zweite der Verbindungsplatten mehrere Ausnehmungen auf, wobei jeder Vorsprung in eine Ausnehmung hineinragt. Die Verbindungsplatten können je nach dem Werkstoff, aus dem die Bauteile bestehen, auf verschiedene Weise an den Anschlussflächen der Bauteile befestigt werden, so beispielsweise durch Schrauben, Nageln, Schweissen oder Kleben. Die Befestigung einer Verbindungsplatte bietet besondere Probleme im Holzbau, und zwar dann, wenn die Anschlussfläche eine Himholzfläche ist.

Aus der **DE-A1-34 01 303** ist eine Verbindungsanordnung der eingangs genannten Art bekannt. Die Vorsprünge und Ausnehmungen befinden sich sind längs zweier übereinander angeordneter länglicher Bereiche und hindern die Bauteile daran, sich in Richtung der Anschlussflächen zu verschieben und sich zu drehen. Um Bewegungen der Bauteile quer zu den Anschlussflächen zu verhindern, ist in jedem der Bereiche der Ausnehmungen und Vorsprünge eine Stift angeordnet, der in einer Bohrung aufgenommen ist, welche sich, ausgehend vom balkenartigen Bauteil, horizontal durch die Ausnehmungen und Vorsprünge erstreckt. Nach der Montage wird die durch die Bohrung im balkenartigen Bauteil entstandene Ausnehmung durch einen Zapfen verschlossen, welcher verhindert, dass sich der Stift entfernt.

Aus dem Belgischen Patent **BE-450662** ist eine Verbindungsanordnung der eingangs genannten Art bekannt, die üblicherweise bei montier- bzw. demontierbaren Möbeln zum Einsatz kommt. Es handelt sich um eine relativ einfache Verbindung, mit der man zum Beispiel zwei Holzplatten eines Schrankes verbinden kann. Beim Ineinanderstecken einer ersten mit einer zweiten Verbindungsplatte muss eine Bewegung parallel zu zwei senkrecht aufeinander stehenden Achsen vollzogen werden. In einem ersten Montageschritt muss dabei die erste Verbindungsplatte mit ihren beiden Nocken in Ausnehmungen der zweiten Verbindungsplatte hinein bewegt werden. Erst dann kann man die erste Verbindungsplatte in Bezug auf die zweite Verbindungsplatte absenken. Die Verbindungsanordnung gemäss **BE-450662** ist wenig stabil und teuer in der Herstellung.

Aus dem Französischen Gebrauchsmuster **74 02979** ist eine weitere Verbindungsanordnung bekannt. Die Verbindungsanordnung besteht aus schwalbenschwanzartige ineinander greifenden Verbindungsplatten, die ineinander geschoben werden können. Die gezeigte Verbindungsanordnung verhindert ein Verdrehen gegeneinander. Auch kann die durch die Verbindungsanordnung miteinander verbunden Bauteile nicht trennen, ohne eine Verschiebungsbewegung auszuführen. Die Verbindungsanordnungen nach dem Gebrauchsmuster **74 02979** sind jedoch nicht als Verbindung für tragende Bauteile geeignet, da die eine Verbindungsplatte je nach Beanspruchungsrichtung einfach durch die andere Verbindungsplatte hindurch rutschen würde.

Der Nachteil dieser Verbindungsanordnung ist darin zu sehen, dass die Montage, insbesondere das Herstellen der Bohrungen und das Einführen der Stifte, mühselig und zeitraubend ist. Ausserdem sind im montierten Zustand die Zapfen sichtbar, was bei Verwendung der Verbindungsanordnung im Holzbau zu Wohnzwecken nicht erwünscht ist.

Die Aufgabe der Erfindung wird somit darin gesehen, eine Verbindungsanordnung der eingangs genannten Art und deren Verwendung vorzuschlagen, wobei die erwähnten Nachteile vermieden werden sollen.

Diese Aufgabe wird erfindungsgemäss für die Verbindungsanordnung durch den kennzeichnenden Teil des Patentanspruchs **1** und für deren Verwendung durch den kennzeichnenden Teil des Patentanspruchs **6** gelöst.

Der Vorsprung bildet mit der ihm zugehörigen Ausnehmung nach der Montage der Verbindungsanordnung eine tragende Vorsprungs/Ausnehmungs-Einheit. Erfindungsgemäss sind die Abmessungen der Vorsprünge quer zur ersten Verbindungsplatte, an der sie befestigt sind, maximal so gross wie die Plattendicke der zweiten Verbindungsplatte. Die Vorsprünge erweitern sich mit zunehmendem Abstand von der Vorderfläche der ersten Verbindungsplatte, und entsprechend erweitern sich die Ausnehmungen in der zweiten Verbindungsplatte mit zunehmendem Abstand von der Vorderfläche der zweiten Verbindungsplatte. Im montierten Zustand bilden die Vorsprünge somit eine Art Anker, mit welchen die erste Verbindungsplatte in der zweiten Verbindungsplatte verankert ist. Durch diese Ausbildung der Vorsprünge und Ausnehmungen erreicht man, dass alle relativen Verschiebungen quer zur Richtung der Verbindungsplatten verhindert werden, und ebenso lineare Bewegungen in Richtung der Verbindungsplatten, mit Ausnahme einer zur Montagerichtung gegenläufigen linearen Bewegung. Zur Verhinderung einer relativen Drehung der beiden Verbindungsplatten um eine senkrecht zu ihnen gerichtete Drehachse weist die erste Verbindungsplatte einen weiteren Vorsprung auf, der zur Bildung einer rotationssichernden Vorsprungs/Ausnehmungs-Einheit bestimmt ist. Entweder greift der zweite Vorsprung in dieselbe Ausnehmung ein wie der erstgenannte Vorsprung, liegt jedoch im montierten Zustand nicht an einem Endbereich der Ausnehmung an und bildet dadurch eine nur rotationsverhindernde Vorsprungs/Ausnehmungs-Einheit, oder der zweite Vorsprung greift in eine weitere Ausnehmung ein, mit welcher er eine weitere tragende und gleichzeitig auch rotationsverhindernde Vorsprungs/Ausnehmungs-Einheit bildet.

Der Vorteil, der mit der neuen Verbindungsanordnung gegenüber der erwähnten vorbekannten Verbindungsanordnung erreicht wird, besteht darin, dass der die Vorsprünge und Ausnehmungen traversierende Stift, wie er bei der erwähnten vorbekannten Verbindungseinrichtung erforderlich ist, wegfällt wodurch die Konstruktion generell vereinfacht wird. Dabei fällt besonders ins Gewicht, dass die auf der Baustelle auszuführenden Arbeiten, insbesondere die Herstellung der Bohrung, erleichtert wird. Ausserdem ist die Verbindungsanordnung auch dort verwendbar, wo hohe Ansprüche an die Ästhetik gestellt werden, und zwar einerseits durch den Wegfall des Zapfens und anderseits durch die gegenseitige Anlage der beiden Verbindungsplatten, welche sich durch die entsprechende Dimensionierung der Vorsprünge der ersten Verbindungsplatte und der Plattendicke der zweiten Verbindungsplatte ergibt.

Die Verbindungsplatten können aus Metall, Kunststoff, Holz oder holzhaltigem Material hergestellt werden, wobei vorzugsweise die Vorsprünge durch in oder an der ersten Verbindungsplatte befestigte Bolzen gebildet werden; ggfs. können als Vorsprünge Kopfbereiche von eingeschraubten Schrauben benutzt werden, so dass sich die Herstellung von Spezialteilen erübrigt.

Die Verbindungsanordnung kann auch einen oder mehrere weitere Vorsprünge aufweisen, wobei der zweite und jeder weitere Vorsprung in eine ihm zugehörige Ausnehmung eingreift, um jeweils eine tragende Vorsprungs/Ausnehmungs-Einheit zu bilden.

Durch die erfindungsgemässe Ausbildung der Vorsprünge und Durchbrüche, welche die weiter oben erwähnte Verankerung der zweiten in der ersten Verbindungsplatte ermöglichen, können die beiden Verbindungsplatten nicht quer zu ihrer Berührungsfläche zusammengeschoben werden, sondern die getragene Verbindungsplatte bzw. der getragene Bauteil muss mit der tragenden Verbindungsplatte bzw. dem tragenden Bauteil so zusammengeschoben werden, dass mindestens am Ende des Verbindungsvorgangs eine etwa parallel zur Berührungsfläche der Verbindungsplatten verlaufende relative Bewegung ausgeführt wird. Um dies zu ermöglichen, können die Ausnehmungen als Durchbrüche ausgebildet sei, die durch von einem Plattenrand ausgehende parallele Schlitze gebildet sind. Diese Schlitze in der zweiten Verbindungsplatte gehen vom unteren bzw. oberen Plattenrand aus, je nachdem ob die erste Verbindungsplatte mit den Vorsprüngen am tragenden oder am getragenen Bauteil befestigt ist.

In einer anderen Ausführungsform sind die Ausnehmungen lochartige Durchbrüche, deren Breite sich in vertikaler Richtung verändert. Die Durchbrüche sind unten bzw. oben breiter, je nachdem ob die erste Verbindungsplatte mit den Vorsprüngen am tragenden oder am getragenen Bauteil befestigt ist

Die neue Verbindungsanordnung kann in einfacher Weise mit einer Sicherungsvorrichtung versehen werden. Zu diesem Zweck wird in jeder Verbindungsplatte am Plattenrand eine Ausnehmung angebracht, derart, dass diese Ausnehmungen im montierten Zustand koinzidieren. Von diesen Ausnehmungen aus wird dann in einem Schlitz ein Sicherungskörper angebracht.

Bei der Verwendung der neue Verbindungsanordnung werden die Verbindungsplatten erfindungsgemäss mit geeigneten Verbindungsmitteln an den Anschlussflächen der Bauteile befestigt.

Die neue Verbindungsanordnung lässt sich unter anderem auch dann verwenden, wenn eine oder ggfs. auch beide der zu verbindenden Anschlussfläche Himholzflächen sind. Wenn aber zur Befestigung der Verbindungsplatten sonst einige wenige Schrauben oder ein Klebstoff genügen, so werden im Fall von Anschlussflächen aus Hirnholz vorzugsweise eine Vielzahl von Verbindungselementen wie Nägel oder Schrauben verwendet, wobei die Gewindegänge der Schrauben bevorzugt eine abgerundete Kontur aufweisen.

Eine in ästhetischer Beziehung besonders günstige Verbindung zweier Bauteile unter Verwendung der neuen Verbindungsanordnung erhält man, wenn man mindestens eine der Verbindungsplatten in einer Ausnehmung des entsprechenden Bauteiles anordnet.

Bei den bisher beschriebenen Ausführungsformen der Verbindungsanordnungen sind die beiden Verbindungsplatten unterschiedlich ausgebildet. Für die Lagerhaltung und Montage wäre es aber besonders vorteilhaft, über Verbindungsanordnungen zu verfügen, welche sich aus zwei gleichen Verbindungsplatten herstellen lassen.

Die weitere Aufgaben der Erfindung besteht somit darin, eine Verbindungsanordnung mit gleichen Verbindungsplatten sowie die Verwendung dieser Verbindungsanordnung vorzuschlagen.

Diese Aufgabe wird durch die Merkmale der Patentansprüche **6** bis **8** gelöst.

Im folgenden wird die Erfindung anhand von Ausführungsbeispielen und mit Bezug auf die Zeichnung ausführlich beschrieben. Es zeigt:
- **Fig. 1**: eine Verbindung von zwei Bauteilen mit einer Verbindungsanordnung nach der Erfindung, in einem vereinfachten Horizontalschnitt;
- **Fig. 2**: eine erste Ausführungsform der Verbindungsanordnung, mit nicht zusammengefügten Verbindungsplatten, mit zwei Ausnehmungen in Form von allseitig berandeten Durchbrüchen; wobei von beiden Verbindungsplatten die Vorderseite sichtbar ist, in einem Schaubild;
- **Fig. 3A**: eine zweite Ausführungsform der Verbindungsanordnung, mit nicht zusammengefügten Verbindungsplatten, mit Ausnehmungen in Form von zwei Schlitzen, wobei von beiden Verbindungsplatten die Vorderseite sichtbar ist, in einem Schaubild;
- **Fig. 3B**: eine dritte Ausführungsform der Verbindungsanordnung, mit nicht zusammengefügten Verbindungsplatten, mit einer Ausnehmung in Form eines Schlitzes, wobei von beiden Verbindungsplatten die Vorderseite sichtbar ist, in einem Schaubild;
- **Fig. 3C**: eine vierte Ausführungsform der Verbindungsanordnung, mit nicht zusammengefügten Verbindungsplatten, ebenfalls mit einer Ausnehmung in Form eines Schlitzes, wobei von beiden Verbindungsplatten die Vorderseite sichtbar ist, in einem Schaubild;
- **Fig. 4 - 11**: verschiedene Verwendungen der Verbindungsanordnung nach der Erfindung, in vereinfachten Schaubildern.

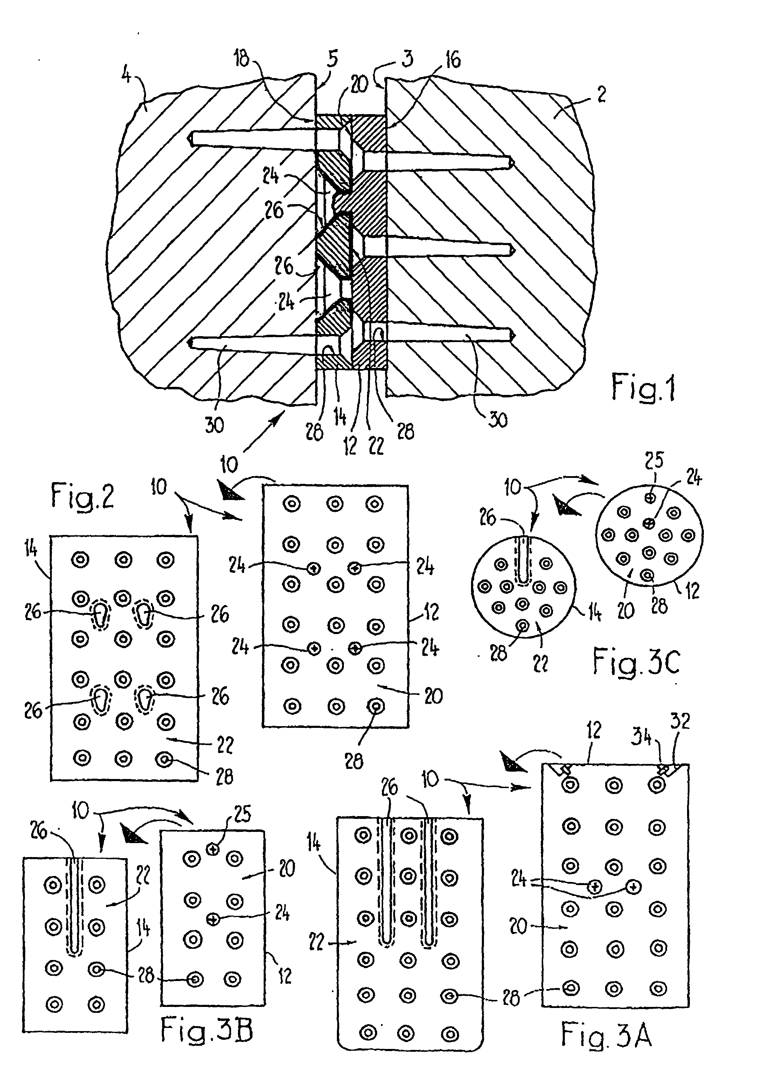

**Fig. 1** zeigt in stark vereinfachter Darstellung das Prinzip der neuen Verbindungsanordnung **10** anhand einer Verbindung eines ersten Bauteiles **2** mit einem zweiten Bauteil **4.** Diese Verbindungsanordnung **10** umfasst eine erste Verbindungsplatte **12** und eine zweite Verbindungsplatte **14.** Die erste Verbindungsplatte **14** ist mit ihrer Hinterfläche **16** an einer Anschlussfläche **3** des ersten Bauteiles **1** befestigt, und die zweite Verbindungsplatte **14** ist mit ihrer Hinterfläche **18** an einer Anschlussfläche 5 des zweiten Bauteiles **4** befestigt. Die Verbindungsplatten **12, 14** weisen Vorderflächen **20, 22** auf, mit denen sie aneinander anliegen. Die erste Verbindungsplatte **12** besitzt mehrere nockenartige Vorsprünge **24,** von denen zwei dargestellt sind. Die zweite Verbindungsplatte **14** besitzt für jeden Vorsprung **24** eine Ausnehmung **26,** in welche der entsprechende Vorsprung **24** hineinragt. Die Vorsprünge **24** weisen einen Querschnitt auf, der sich mit zunehmendem Abstand von der Vorderfläche **20** der ersten Verbindungsplatte **12** erweitert, wobei die Erweiterung nicht stetig verläuft. Die Ausnehmungen **26** sind komplementär ausgebildet und weisen einen Querschnitt auf, der sich mit zunehmender Tiefe erweitert, wobei auch diese Erweiterung nicht stetig verläuft sondern durch eine Durchgangsbohrung und eine einseitige Ansenkung derselben gebildet ist; diese Ausbildung der Ausnehmungen 26 wird bevorzugt, da die Herstellung einer sich nach innen erweiternden Ausnehmung umständlich ist. Die Verbindungsplatten **12, 14** weisen ferner eine Vielzahl von Bohrungen **28** auf, die in den **Fig. 2, 3** und **12** sichtbar sind, und die zur Aufnahme von Verbindungsmitteln wie beispielsweise Nägeln oder Schrauben **30** bestimmt sind, mit deren Hilfe die Verbindungsplatten an den Bauteilen **2, 4** befestigt werden können.

In **Fig. 2** ist die neue Verbindungsanordnung **10** in einer ersten Ausführungsform deutlicher dargestellt, wobei bei den Verbindungsplatten **12, 14** ihre Vorderflächen sichtbar sind. Die vier Vorsprünge **24** der ersten Verbindungsplatte **12** sind durch an bzw. in der Verbindungsplatte **12** befestigte Bolzen oder ähnliche Teile gebildet. Die zweite Verbindungsplatte **16** weist vier Ausnehmungen bzw. Durchbrüche **26** auf, die oben breiter sind als unten, derart, dass während der Montage die erste Verbindungsplatte **12** etwas oberhalb der zweiten Verbindungsplatte **14** sein muss, damit die Ausnehmungen **26** über den erweitertem Teil der Ansätze **24,** das heisst über die Köpfe der Schrauben, bringbar sind, bevor die erste Verbindungsplatte **12** parallel zur zweiten Verbindungsplatte **14** nach unten verschoben wird, bis die Vorsprünge **24** am oberen Bereich der Ausnehmungen **26** anliegen. Jeder der vier Vorsprünge **24** bildet mit der ihm zugehörigen Ausnehmung **26** eine tragende Vorsprungs/Ausnehmungs-Einheit. Beide Verbindungsplatten **12, 14** weisen eine Vielzahl von Bohrungen **28** für nicht dargestellte Nägel oder Schrauben auf, welche wie schon erwähnt dazu bestimmt sind, die Verbindungsplatten **12, 14** an den ebenfalls nicht dargestellten Bauteilen zu befestigen. Bei diesem Ausführungsbeispiel sind die Vorsprünge und Ausnehmungen gleichberechtigt, jeder der Vorsprünge mit der ihm zugehörigen Ausnehmung kann als tragende Vorsprungs/Ausnehmungs-Einheit betrachtet werden, während die weiteren Vorsprünge und Ausnehmungen jeweils tragende und rotationsverhindernde Vorsprungs/Ausnehmungs-Einheiten bilden.

**Fig. 3A** zeigt die neue Verbindungsanordnung **10** in einer ähnlichen Ausführungsform, wobei von beiden Verbindungsplatten **12, 14** ihre Vorderflächen sichtbar sind. Bei dieser Ausführungsform sind nur zwei Vorsprünge **24** vorgesehen, die wie bei der Ausführungsform gemäss **Fig. 2** durch Schrauben gebildet sind. Die Ausnehmungen bzw. Durchbrüche **26** weisen die Form von parallelen, von der oberen Kante der zweiten Verbindungsplatte **14** ausgehenden Schlitzen auf, die mit zunehmendem Abstand von der Vorderfläche breiter werden, wobei die sich in der Hinterfläche abzeichnende Schlitzform durch gestrichelte Linien dargestellt sind. Bei der Montage werden die Vorsprünge **24** der ersten Verbindungsplatte **12** von oben in die Schlitze der zweiten Verbindungsplatte **14** eingeschoben. Die Herstellung dieser Verbindungsanordnung ist einfacher als die Herstellung der Verbindungsanordnung gemäss **Fig. 2,** bedingt aber für die Montage mehr freien Raum in der Vertikalen. Auch bei diesem Ausführungsbeispiel sind die Vorsprünge und Ausnehmungen gleichberechtigt, jeder der Vorsprünge mit der ihm zugehörigen Ausnehmung kann als tragende Vorsprungs- / Ausnehmungseinheit betrachtet werden, während die weiteren Vorsprünge und Ausnehmungen jeweils tragende und rotationsverhindemde Vorsprungs- /Ausnehmungseinheiten bilden.

Ebenfalls in **Fig. 3A** ist gezeigt, wie die neue Verbindungsanordnung **10** mit einer Sicherungsvorrichtung verbessert werden kann. Die Verbindungsplatten **12, 14** weisen zu diesem Zweck je zwei vom oberen Rand ausgehende Ausnehmungen **32** auf, von welchen je zwei im montierten Zustand koinzidieren, und von welchen aus Sicherungskörper **34** angebracht werden können. Die Sicherungsvorrichtung ist nur in der ersten Verbindungsplatte **12** der **Fig. 3** eingezeichnet, obwohl sie in entsprechender Anordnung auch in der zweiten Verbindungsplatte **14** der **Fig. 3** vorhanden ist und selbstverständlich auch in den anderen Verbindungsplatten vorhanden sein kann.

**Fig. 3B** und **Fig. 3C** zeigen zwei Ausführungsbeispiele von Verbindungsanordnungen **10,** mit einem ersten Vorsprung **24** an der ersten Verbindungsplatte **12,** der dazu bestimmt ist, in eine schlitzförmige Ausnehmung **26** der zweiten Verbindungsplatte **14** hineinzuragen und zusammen mit diesem eine tragende Vorsprungs/Ausnehmungs-Einheit zu bilden. Ein zweiter Vorsprung 25 ist dazu bestimmt, in denselben Schlitz **26** hineinzuragen und eine rotationsverhindernde Vorsprungs/Ausnehmungs-Einheit zu bilden.

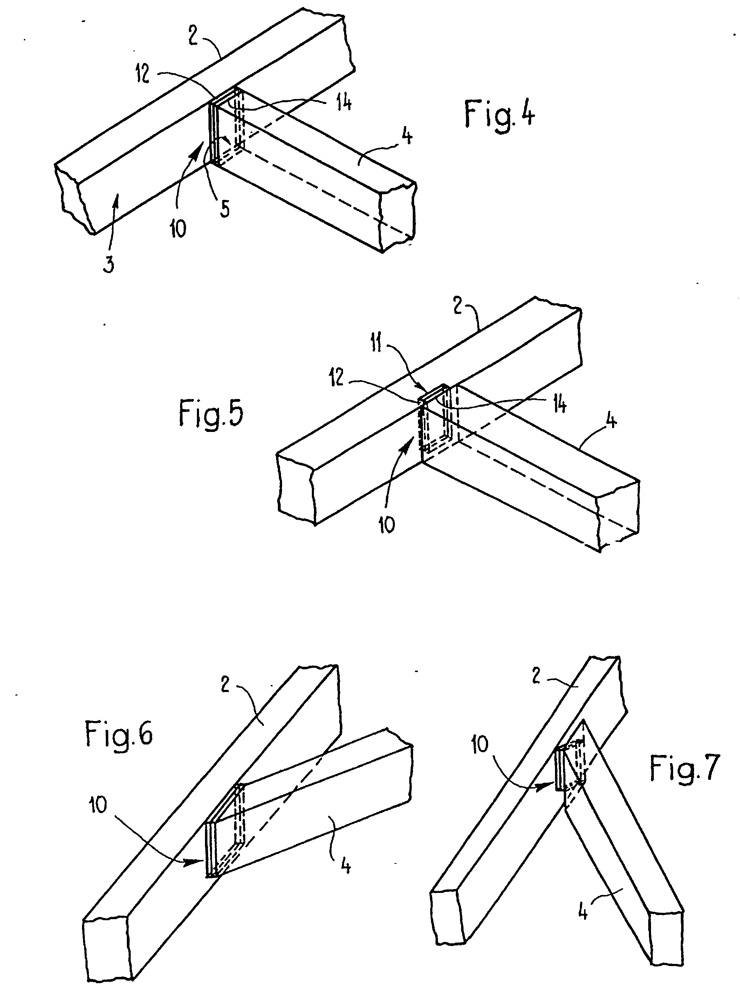

**Fig. 4** zeigt eine Verwendung der neuen Verbindungsanordnung **10,** wobei der erste Bauteil **2** und der zweite Bauteil **4** Horizontalträger in Balkenform sind. Die erste Verbindungsplatte **12** ist an der die erste Anschlussfläche **3** bildenden vertikalen Seitenfläche des ersten Bauteils **2** befestigt, und die zweite Verbindungsplatte **14** ist an der die zweite Anschlussfläche **5** bildenden Stimfläche des zweiten Bauteils **4** befestigt.

Eine insbesondere im Wohnbereich bevorzugte Art der Verwendung der neuen Verbindungsanordnung **10** ist in **Fig. 5** dargestellt. Auch hier werden ein erster Bauteil **2** in Form eines Horizonträgers und ein zweiter Bauteil **4** in Form eines Horizontalträgers verbunden. Die erste Verbindungsplatte **12** ist aber nicht an der vertikalen Seitenfläche des ersten Bauteils **12** angeordnet, sondern der erste Bauteil **2** weist eine Ausnehmung **11** auf, in welcher die erste Verbindungsplatte befestigt ist. Die Ausnehmung, in welche die erste Verbindungsplatte **12** versenkt ist, kann auch so tief sein, dass in montierten Zustand beide Verbindungsplatten **12, 14** in ihr Platz finden.

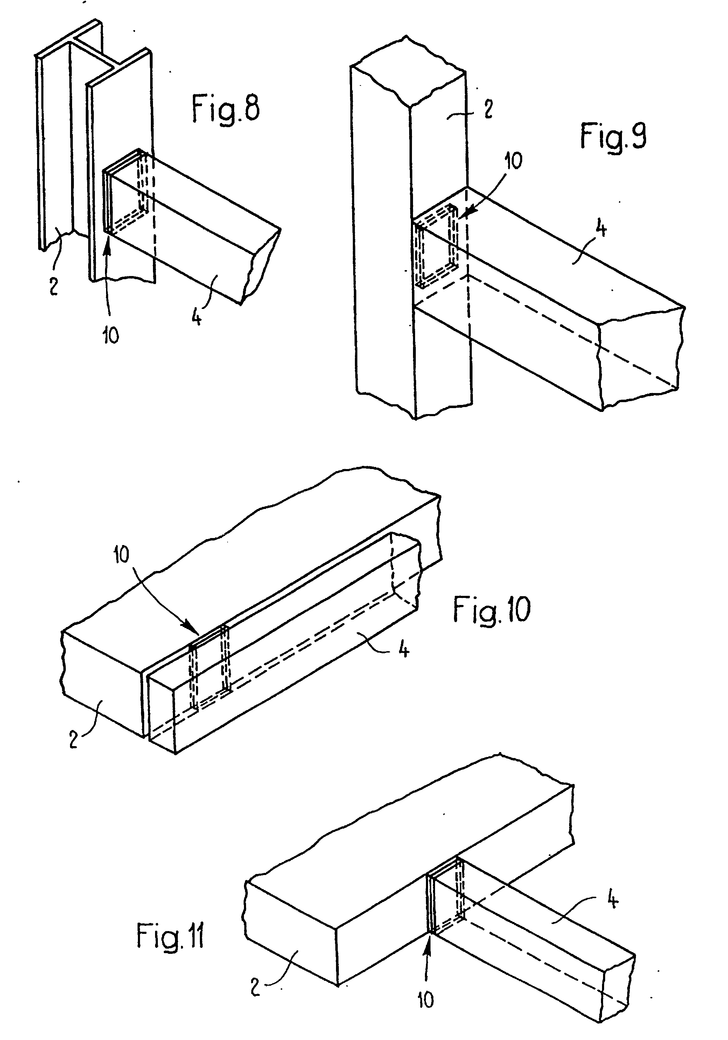

Die **Fig. 6** und **7** zeigen zwei weitere Verwendungen der neuen Verbindungsanordnung **10** zur Verbindung von jeweils zwei balkenartigen Bauteilen **2** und **4.** Die Verbindungsanordnung **10** ist auch in diesen Fällen einwandfrei zu verwenden, obwohl die Bauteile **2** und **4** absolut und relativ zueinander schiefe Lagen einnehmen.

**Fig. 8** zeigt die Verbindung von zwei Bauteilen **2, 4,** wobei beispielsweise der Bauteile **2** ein vertikaler Doppel-T-Träger aus Stahl und der Bauteil 4 ein horizontaler Holzbalken ist.

In **Fig. 9** ist dargestellt, wie die neue Verbindungsanordnung **10** zur Verbindung eines ersten Bauteils **2** in Form einer vertikalen Stütze mit einem zweiten Bauteil **4** in Form eines Horizontalträgers verwendet werden kann.

**Fig. 10** zeigt, dass die Verbindungsanordnung **10** auch verwendet werden kann, um einen ersten Bauteil **2,** der durch eine Betonplatte gebildet ist, mit einem zweiten, längs der Seite der Betonplatte verlaufenden balkenartigen Bauteil **4,** beispielsweise aus Holz, zu verbinden.

Eine weitere Verwendungsmöglichkeit der neuen Verbindungsanordnung **10** ist in **Fig. 11** dargestellt. Es handelt sich dabei um den Anschluss einer Stimseite eines zweiten Bauteils **4** an eine Betonplatte, welche den ersten Bauteil **2** bildet.

Die beschriebenen und dargestellten Ausführungsbeispiele stellen nur einen kleinen Teil der erfindungsgemäss möglichen Ausführungsformen der neuen Verbindungsanordnung dar. Insbesondere kann nach Bedarf entweder die erste oder die zweite Verbindungsplatte am tragenden bzw. am getragenen Bauteil angeordnet werden, und die Verbindungsplatten können auch an schiefen Ebenen angeordnet sein. Die Nägel oder Schrauben, mittels welchen die Verbindungsplatten an den Bauteilen befestigt werden, können nicht nur parallel zur Flächennormalen der Anschlussflächen sondern auch unter einem kleinen Winkel zu diesen Flächennormalen angebracht werden, wobei vorzugsweise die verschiedenen Nägel oder Schrauben unter sich nicht parallel sind. Damit erreicht man eine bessere Verankerung.

## Patentansprüche

1. Verbindungsvorrichtung **(10)** zum Verbinden eines ersten Bauteils **(2)** mit einem zweiten Bauteil **(4),** umfassend
- eine erste Verbindungsplatte **(12),** welche mit ihrer Hinterfläche **(16)** am ersten Bauteil **(2)** befestigbar ist, und
- eine zweite Verbindungsplatte **(14),** welche mit ihrer Hinterfläche **(18)** am zweiten Bauteil **(4)** befestigbar ist, wobei
- die erste Verbindungsplatte **(12)** an ihrer Vorderfläche **(20)** mindestens einen Vorsprung **(24)** aufweist, und
- die zweite Verbindungsplatte **(14)** mindestens eine Ausnehmung **(26)** aufweist, in welche der Vorsprung **(24)** eingreift,
- wobei der Vorsprung **(24)** und die zugehörige Ausnehmung **(26)** zur Bildung einer tragenden Vorsprungs/Ausnehmungs-Einheit bestimmt sind,
- wobei die zweite Verbindungsplatte **(14)** eine Plattendicke **(p)** aufweist, die mindestens der Abmessung **(d)** entspricht, um welche der Vorsprung **(24)** quer zur ersten Verbindungsplatte **(12)** über diese vorsteht,
- wobei jeder Vorsprung **(24)** einen Endbereich aufweist, dessen Querschnitt eine grössere Fläche aufweist als die Querschnittsfläche in seinem der ersten Verbindungsplatte **(12)** näheren Bereich,
- wobei jede Ausnehmung **(26)** sich mit zunehmendem Abstand von der Vorderfläche **(22)** erweitert,
- wobei die Verbindungsplatten **(12, 14)** sich in zusammengebautem Zustand mit ihren Vorderflächen **(20, 22)** berühren, und
- wobei die erste Verbindungsplatte **(14)** an ihrer Vorderfläche mindestens einen weiteren Vorsprung **(25)** aufweist, der zur Bildung einer mindestens rotationsverhindernden Vorsprungs/Ausnehmungs-Einheit vorgesehen ist
**dadurch gekennzeichnet,**
- **dass** jeder Vorsprung **(24)** durch ein Kopfteil eines Bolzens gebildet ist, welcher in oder an der ersten Verbindungsplatte **(12)** befestigt ist,
- **dass** die Ausnehmung **(26)** ein Durchbruch ist, der als von einem Plattenrand ausgehender Schlitz ausgebildet ist,
- **dass** die Verbindungsplatten **(12, 14)** eine Vielzahl von ihren Vorderflächen **(20, 22)** ausgehende Bohrungen **(28)** aufweisen, welche zur Aufnahme von Nägeln oder Schrauben bestimmt sind, um die Verbindungsplatten **(12, 14)** an den Bauteilen **(2, 4)** zu befestigen.

2. Verbindungsanordnung **(10)** nach Patentanspruch **1,**
**dadurch gekennzeichnet,**
**dass** das Kopfteil konisch ist.

3. Verbindungsanordnung (**10**) nach mindestens einem der obigen Patentansprüche,
**dadurch gekennzeichnet,**
**dass** mehrere Schlitze parallel angeordnet sind.

4. Verbindungsanordnung **(10)** nach mindestens einem der obigen Patentansprüche,
**dadurch gekennzeichnet,**
**dass** die Ausnehmung (**26**) ein Durchbruch ist, der sich in einer Richtung parallel zur Hinterfläche **(18)** erweitert.

5. Verbindungsanordnung **(10)** nach mindestens einem der obigen Patentansprüche,
**dadurch gekennzeichnet,**
**dass** die erste Verbindungsplatte **(12)** und die zweite Verbindungsplatte **(14)** am Plattenrand je eine koinzidierende Ausnehmung **(13)** aufweisen, von welchen aus ein flacher Sicherungskörper **(15)** in die Verbindungsplatten **(12, 14)** hineinragt.

6. Verwendung der Verbindungsanordnung **(10)** nach mindestens einem der Patentansprüche **1 - 5,** wobei die erste Verbindungsplatte **(12)** an einer Anschlussfläche **(3)** des ersten Bauteils **(2)** und die zweite Verbindungsplatte **(14)** an einer Anschlussfläche **(5)** des zweiten Bauteils **(4)** befestigt sind,
**dadurch gekennzeichnet,**
**dass** mindestens das erste Bauteil **(2)** oder das zweite Bauteil **(4)** ein balkenartiges Bauteil aus Holz ist und eine Hirnholzfläche aufweist,
**dass** zur Befestigung der Verbindungsplatten **(12, 14)** an der Hirnholzfläche, eine Vielzahl von Nägeln oder Schrauben **(30)** verwendet werden.

7. Verwendung nach Patentanspruch **6,**
**dadurch gekennzeichnet,**
**dass** mindestens eine der Verbindungsplatten **(12, 14)** in einer Ausnehmung des Bauteils **(2, 4)** angeordnet ist.

8. Verwendung nach Patentanspruch **6** oder **7**,
**dadurch gekennzeichnet,**
**dass** die Nägel oder Schrauben parallel zur Flächennormalen der Anschlussflächen **(3, 5)** oder unter einem kleinen Winkel zu diesen Flächennormalen angebracht werden.

## Claims

1. Connecting device **(10)** for connecting one construction component **(2)** to a second construction component **(4),** comprising
- one connecting plate **(12)** which can be fixed to one construction component **(2)** by its rear surface **(16),** and
- a second connecting plate **(14)** which can be fixed to a second construction component **(4)** by its rear surface **(18),**
- the first connecting plate **(12)** being provided with at least one projection **(24)** on its front surface **(20),** and
- the second connecting plate **(14)** being provided with at least one recess **(26)** in which the projection **(24)** engages,
- the projection **(24)** and its corresponding recess **(26)** being designed to constitute a load-bearing projection/recess unit,
- the second connecting plate **(14)** having a thickness **(p)** equivalent to at least the dimension **(d)** by which the projection **(24)** projects transversally to the first connecting plate **(12),**
- each projection **(24)** possessing an end part having a greater area in cross-section than the cross-section area of that part of it which is nearer to the first connecting plate **(12)**,
- each recess **(26)** becoming broader as the distance from its front surface **(22)** increases,
- the connecting plates **(12, 14)** in assembled state being in contact on their front surfaces **(20, 22),** and
- the first connecting plate **(12)** possessing at least one additional projection **(25)** on its front surface, designed to constitute a projection/recess unit which shall at least prevent rotation,
**characterized in that**
- each projection **(24)** is formed by the head of a stud which is fastened to or in the first connecting plate **(12),**
- the recess **(26)** is an opening which is formed as a slit starting from one edge of the plate,
- the connecting plates **(12, 14)** are drilled with numerous holes **(28)** which start from their front surfaces **(20, 22)** and are designed to accept nails or screws in order to fasten the connecting plates **(12, 14)** to the construction components **(2, 4)**.

2. Connecting device **(10)** in accordance with Claim 1,
**characterized in that**
the head part is conical.

3. Connecting device **(10)** in accordance with at least one of the above claims,
**characterized in that**
several slits are arranged parallel to each other.

4. Connecting device **(10)** in accordance with at least one of the above claims,
**characterized in that**
the recess **(26)** is an opening that grows wider in a direction parallel to the rear surface **(18).**

5. Connecting device **(10)** in accordance with at least one of the above claims,
**characterized in that**
coinciding recesses **(13)** are provided in the edge of each of the first connecting plate **(12)** and the second connecting plate **(14)** and from these recesses a flat securing element **(15)** projects into the connecting plates **(12, 14).**

6. Use of the connecting device **(10)** in accordance with at least one of Claims 1-**5,** the first connecting plate **(12)** being fixed to a connecting surface **(3)** of the first construction component **(2)** and the second connecting plate **(14)** being fixed to a connecting surface **(5)** of the second construction component **(4).**
**characterized in that**
at least the first construction component **(2)** or the second construction component **(4)** is a wooden component of the nature of a beam and displays a cross-grained surface,
and to fix the connecting plates **(12, 14)** to the cross-grained surface, a number of nails or screws **(30)** are used.

7. Use in accordance with Claim 6,
**characterized in that**
at least one of the connecting plates **(12, 14)** is fitted in a recess of the construction component **(2** or **4).**

8. Use in accordance with Claim 6 or 7,
**characterized in that**
the nails or screws are inserted parallel to the normals to the connection surfaces **(3, 5)** or at a low angle to these normals to the connection surfaces.

## Revendications

1. Dispositif d'assemblage **(10)** destiné à assembler un premier élément de construction **(2)** avec un deuxième élément de construction **(4),** comprenant
- une première plaque d'assemblage **(12)** pouvant être fixée au premier élément de construction **(2)** par sa face arrière **(16)**, et
- une deuxième plaque d'assemblage **(14)** pouvant être fixée au deuxième élément de construction **(4)** par sa face arrière **(18)**,
- la première plaque d'assemblage **(12)** présentant au moins une saillie **(24)** sur sa face avant **(20),** et
- la deuxième plaque d'assemblage **(14)** présentant au moins une cavité **(26)** dans laquelle s'enclenche la saillie **(24),**
- la saillie **(24)** et la cavité **(26)** s'y rapportant étant destinées à former une unité porteuse saillie/cavité,
- la deuxième plaque d'assemblage **(14)** ayant une épaisseur de plaque **(p)** qui correspond au moins à la dimension **(d)** dont la saillie **(24)** avance, transversalement par rapport à la première plaque d'assemblage **(12),** au-dessus de celle-ci,
- chaque saillie **(24)** comportant une zone terminale dont la section transversale possède une surface plus grande que la surface de la section transversale se trouvant dans la zone de la saillie **(24)** plus proche de la première plaque d'assemblage **(12)**,
- chaque cavité **(26)** s'élargissant en s'éloignant de la face avant **(22),**
- les plaques d'assemblage **(12, 14)** se touchant, lorsqu'elles sont assemblées, par leurs faces avant **(20, 22),** et
- la première plaque d'assemblage **(12)** présentant sur sa face avant au moins une autre saillie **(25)** destinée à former au moins une unité saillie/cavité empêchant la rotation
**caractérisé en ce que**
- chaque saillie **(24)** est formée par un élément de tête d'un boulon fixé dans ou sur la première plaque d'assemblage **(12),**
- la cavité **(26)** est une ouverture ayant la forme d'une fente partant d'un bord de la plaque,
- les plaques d'assemblage **(12, 14)** comportent un grand nombre de perçages **(28)** sortant de leurs faces avant **(20, 22),** destinés à accueillir des clous ou des vis afin de fixer les plaques d'assemblage **(12, 14)** sur les éléments de construction **(2, 4).**

2. Dispositif d'assemblage **(10)** conforme à la revendication **1**
**caractérisé en ce que**
l'élément de tête est conique.

3. Dispositif d'assemblage **(10)** conforme à au moins l'une des revendications ci-dessus,
**caractérisé en ce que**
plusieurs fentes sont disposées de façon parallèle.

4. Dispositif d'assemblage **(10)** conforme à au moins l'une des revendications ci-dessus,
**caractérisé en ce que**
la cavité **(26)** est une ouverture s'élargissant dans une direction de façon parallèle à la face arrière **(18).**

5. Dispositif d'assemblage **(10)** conforme à au moins l'une des revendications ci-dessus,
**caractérisé en ce que**
la première plaque d'assemblage **(12)** et la deuxième plaque d'assemblage **(14)** comportent chacune, sur le bord de la plaque, une cavité **(13)** coïncidant l'une avec l'autre d'où dépasse un élément d'arrêt plat **(15)** entrant dans les plaques d'assemblage **(12, 14).**

6. Utilisation du dispositif d'assemblage **(10)** conforme à au moins l'une des revendications **1** à **5**, la première plaque d'assemblage **(12)** étant fixée à une surface de raccordement **(3)** du premier élément de construction **(2)** et la deuxième plaque d'assemblage **(14)** étant fixée à une surface de raccordement **(5)** du deuxième élément de construction **(4),**
**caractérisée en ce**
**qu'**au moins le premier élément de construction **(2)** ou le deuxième élément de construction **(4)** est un élément de construction en bois de type poutre et comporte une surface en bois de bout,
**qu'**un grand nombre de clous ou de vis **(30)** est utilisé pour fixer les plaques d'assemblage **(12, 14)** à la surface en bois de bout.

7. Utilisation conforme à la revendication **6,**
**caractérisée en ce**
**qu'**au moins l'une des plaques d'assemblage **(12, 14)** est placée dans une cavité de l'élément de construction **(2, 4).**

8. Utilisation conforme à la revendication **6** ou **7,**
**caractérisée en ce**
**que** les clous ou les vis sont placés de façon parallèle à la normale à la surface des surfaces de raccordement **(3, 5)** ou selon un angle faible par rapport à ces normales.
